# FASCICULE DE BREVET EUROPEEN

(11) **EP 0 438 350 B1**
(45) Date de publication et mention de la délivrance du brevet: **23.06.1993**
(21) Numéro de dépôt: 91400088.0
(22) Date de dépôt: 16.01.1991
(51) Int. Cl.: G11B 5/39

(54) **Tête magnétique de lecture et d'écriture à élément magnétorésistant**
Aufnahme- und Wiedergabe-Magnetkopf mit magnetoresistivem Element
Read and write magnetic head with magnetoresistive element

(30) Priorité: 18.01.1990 FR 9000556
(43) Date de publication de la demande: 24.07.1991
(73) Titulaire: COMMISSARIAT A L'ENERGIE ATOMIQUE, 75015 Paris (FR)
(72) Inventeur: Lazzari, Jean-Pierre, F-38700 Corenc (FR)
(74) Mandataire: Mongrédien, André

(56) Documents cités:
- EP-A- 0 238 110
- WO-A-88/07741
- GB-A- 2 146 481

## Description

La présente invention a pour objet une tête de lecture et d'écriture à élément magnétorésistant. Une telle tête est décrite dans WO-A-88/07741.

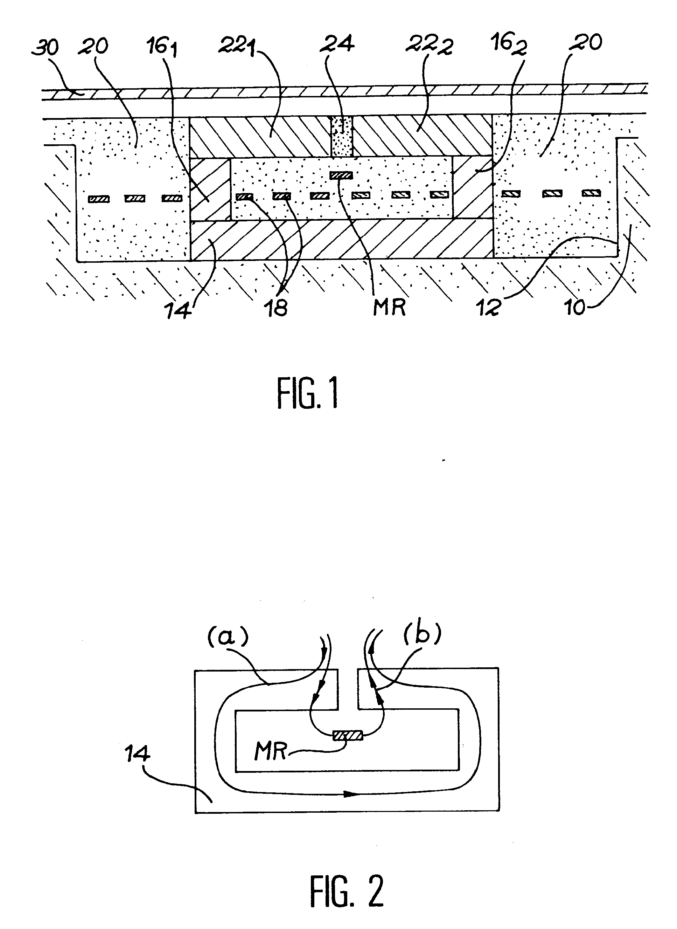

L'invention s'applique essentiellement aux têtes dites horizontales à couches minces. Une telle tête est représentée sur la figure 1 annexée.

Sur cette figure, on voit, en coupe, une tête horizontale comprenant un substrat semiconducteur 10, par exemple en silicium, dans lequel a été gravé un caisson 12; dans ce caisson, une couche magnétique inférieure 14 a été formée électrolytiquement et a été prolongée par deux plots verticaux 16₁, 16₂ ; un bobinage 18 entoure les plots ; ce bobinage est noyé dans une couche isolante 20. Le circuit magnétique se complète par une pièce polaire supérieure séparée en deux parties 22₁, 22₂ par un espaceur amagnétique 24. Un élément magnétorésistant MR, par exemple en Fe-Ni, est disposé sous l'espaceur amagnétique 24. Cet élément est obtenu par photogravure, en prenant l'espaceur comme masque. Il est donc autoaligné par rapport à l'espaceur. La tête se déplace devant un support magnétique 30 où sont enregistrées les informations à lire ou à écrire.

Une telle tête est décrite dans la demande de brevet français déposée par le Demandeur le 29 mars 1989 et publiée sous le numéro 2645314, et intitulée "Tête magnétique à magnétorésistance pour enregistrement longitudinal et procédé de réalisation d'une telle tête".

Le fonctionnement de ce dispositif est schématiquement le suivant.

A l'écriture, le courant circulant dans le bobinage 18 crée un champ magnétique et, par conséquent, une induction dans le circuit magnétique. Les lignes de champ qui s'épanouissent autour de l'espaceur induisent une aimantation dans le support 30.

A la lecture, une information magnétique enregistrée dans le support 30 produit un champ magnétique de lecture et, par conséquent, une induction dans le circuit magnétique; cette induction se referme, en partie, à travers l'élément magnétorésistant MR. Il en résulte une aimantation de lecture dans cet élément, qui va provoquer une variation de résistance de l'élément.

Bien que donnant satisfaction à certains égards, de telles têtes présentent un inconvénient lié à la relative faiblesse du signal de lecture. Cette faiblesse tient essentiellement à ce que le flux magnétique de lecture ne se referme pas en totalité à travers l'élément magnétorésistant MR. En effet, à la lecture, le flux magnétique issu du support 30 se referme en empruntant deux chemins différents illustrés sur la figure 2 annexée :
- un chemin (a) qui emprunte la pièce polaire inférieure 14,
- un chemin (b) qui se referme à travers l'élément magnétorésistant MR.

Une partie du flux magnétique se trouve donc inutilisée dans l'étape de lecture.

La présente invention a justement pour but d'éviter cet inconvénient.

A cette fin, l'invention préconise d'ouvrir le circuit magnétique de telle sorte que le chemin (a) mentionné ci-dessus se trouve interrompu. Le chemin (b) se trouve alors privilégié.

Naturellement, l'amélioration du signal de lecture qui en résulte est obtenue au détriment du signal d'écriture. C'est justement le mérite de l'invention d'avoir pu définir un compromis acceptable entre ces deux objectifs antagonistes et d'avoir montré, qu'en dépit d'une réduction de l'efficacité à l'écriture, la tête pouvait être améliorée globalement dans ses performances, grâce à l'augmentation considérable de sa sensibilité en lecture.

De façon plus précise, la présente invention a pour objet une tête magnétique de lecture et d'écriture telle que décrite dans la revendication 1.

Dans une première variante, la tête de l'invention ne comprend qu'une pièce polaire supérieure.

Dans une seconde variante, la tête de l'invention comprend une pièce polaire supérieure et une pièce polaire inférieure parallèle à la pièce polaire supérieure, mais non reliée magnétiquement à celle-ci.

De toute façon, les caractéristiques et avantages de l'invention apparaîtront mieux à la lumière de la description qui va suivre. Cette description porte sur des exemples de réalisation donnés à titre explicatif et nullement limitatif et se réfère à des dessins annexés, sur lesquels :
- la figure 1, déjà décrite, montre une tête magnétique selon l'art antérieur,
- la figure 2, déjà décrite, montre les deux chemins de fermeture du flux de lecture selon l'art antérieur,
- la figure 3 montre une tête conforme à l'invention, selon un premier mode de réalisation,
- la figure 4 montre une tête conforme à l'invention, selon un second mode de réalisation.

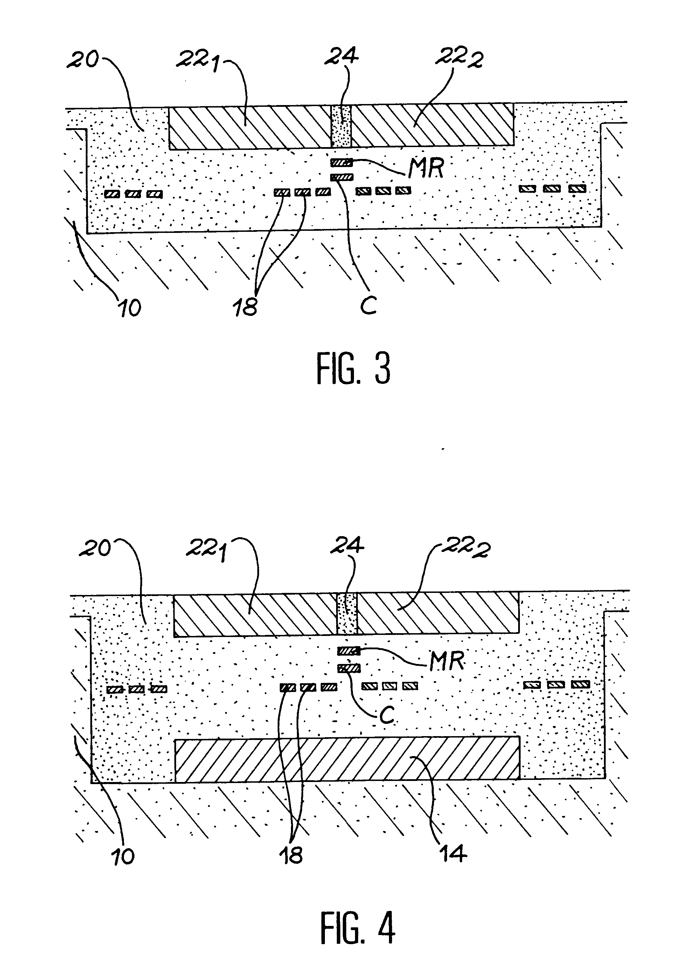

La tête représentée sur la figure 3 comprend des éléments en commun avec celle de la figure 1. Ces éléments portent les mêmes références. Il s'agit du substrat 10, du bobinage 18 noyé dans l'isolant 20, de la pièce polaire supérieure formée des deux parties 22₁ et 22₂, de l'entrefer 24 constitué par un espaceur amagnétique, et enfin de l'élément magnétorésistant MR. Cependant, contrairement aux têtes de l'art antérieur, il n'y a pas de pièce polaire inférieure et pas de pilier. Le flux de lecture se referme donc en totalité par l'élément MR. A l'écriture, le flux créé est naturellement très affaibli et tombe à environ 400 Oe, (soit environ 32000A/m) au lieu de 6000 Oe (soit environ 480000A/m) dans le cas de la tête de la figure 1. Mais cette valeur reste suffisante.

On observera que le bobinage 18 se trouve davantage resserré au voisinage de l'entrefer que dans la tête de la figure 1, ce qui améliore quelque peu le champ d'écriture. On peut aussi rapprocher le plan du bobinage de la pièce polaire supérieure.

La tête de la figure 3 comprend encore un élément référencé C, qui est une couche conductrice dans laquelle un courant de polarisation peut être injecté pour produire une induction de polarisation dans l'élément MR. L'induction au repos (c'est-à-dire en l'absence de champ de lecture) est alors inclinée par rapport aux lignes de courant servant à lire la variation de résistance de l'élément MR. Une telle disposition est en soi connue et décrite par exemple (dans le cas d'une tête verticale) dans le document de brevet US-A-4 734 644.

Mais la présence d'un tel conducteur n'est pas obligatoire. On peut lui préférer une couche conductrice dite en "barber pole" déposée sur l'élément MR lui-même et créant un courant oblique par rapport à l'axe longitudinal de l'élément MR. Un dispositif à "barber pole" est décrit notamment dans l'article de M.G.J. HEIJMAN et al. intitulé "Multi-track magnetic heads in thin-film technology", publié dans "Philips Technical Review" vol. 44, n° 6, Décembre 1988, pp. 169-178.

La tête de la figure 4 diffère de celle de la figure 3 par l'adjonction d'une pièce polaire inférieure 14. Le champ d'écriture s'élève quelque peu et passe alors à 2400 Oe (soit 192000A/m). La pièce polaire inférieure a notamment pour effet de blinder magnétiquement la tête et d'éviter que des champs extérieurs parasites viennent perturber l'élément magnétorésistant MR.

Quelle que soit la variante utilisée, il est possible d'utiliser l'élément conducteur C comme moyen de compensation de l'induction de lecture, comme décrit dans une demande de brevet français antérieure déposée par le Demandeur le 17 janvier 1990 sous le numéro 90 00490 pour "Tête magnétique à élément magnétorésistant et à asservissement de courant".

## Revendications

1. Tête magnétique de lecture et d'écriture à l'élément magnéto-résistant, caractérisée par :
- un caisson gravé dans un substrat (10) et rempli d'isolant (20),
- à la surface de l'isolant, une seule pièce polaire formée de deux parties (22₁, 22₂) séparées par un entrefer (24),
- un élément magnéto-résistant (MR) disposé sous l'entrefer (24) et noyé dans l'isolant (20),
- un bobinage conducteur (18) situé sous la pièce polaire (22₁, 22₂) et sous l'élément magnéto-résistant (MR) et noyé dans l'isolant.

2. Tête magnétique selon la revendication 1, comprenant une autre pièce polaire (14) au fond du caisson, cette seconde pièce étant parallèle à la première et non reliée à celle-ci.

## Claims

1. Magnetic reading and writing head having a magnetoresistant element, characterized in that a recess is etched in a substrate (10) and filled with insulant (20), on the surface of the insulant, a single pole piece is provided formed from two parts (22₁, 22₂) separated by a head gap (24), a magnetoresistant element (MR) is placed beneath the head gap (24) and embedded in the insulant (20) and a conductive coil (18) is positioned below the pole piece (22₁, 22₂) and beneath the magnetoresistant element (MR) being embedded in the insulant.

2. Magnetic head according to claim 1 comprising another pole piece (14) at the bottom of the recess, said second piece being parallel to the first and not connected thereto.

## Patentansprüche

1. Aufnahme- und Wiedergabe- Magnetkopf mit magnetoresistivem Element, **gekennzeichnet** durch:
- einen gravierten Senkkasten in einem Substrat (10), aufgefüllt mit einem Isolationsmittel (20),
- eine einzige polare Platte an der Oberfläche des Isolationsmittels, die aus zwei Teilen (22₁, 22₂) gebildet wird, welche durch einen Spalt (24) getrennt werden.
- ein magnetoresistives Element (MR), welches unter dem Spalt (24) angeordnet ist und in das Isolationsmittel (20) eingebettet ist,
- eine leitende Spule (18), die unter der polaren Platte (22₁, 22₂) und unter dem magnetoresistivem Element (MR) liegt und in das Isolationsmittel eingebettet ist.

2. Magnetkopf nach Anspruch 1, der eine andere polare Platte (14) am Boden des Senkkastens umfasst, wobei diese zweite Platte parallel zur ersten ist und nicht mit dieser verbunden ist.
